# EUROPÄISCHE PATENTANMELDUNG

(11) **EP 3 351 427 A1**
(43) Veröffentlichungstag der Anmeldung: **25.07.2018**
(21) Anmeldenummer: 17001865.9
(22) Anmeldetag: 15.11.2017
(51) Int. Cl.: B60P 1/38, B60P 1/36

(54) **TRANSPORTFAHRZEUG**

(30) Priorität: 18.01.2017 DE 102017000413
(71) Anmelder: Gerdes, Heinrich, 49733 Haren (DE)
(72) Erfinder: Gerdes, Heinrich, 49733 Haren (DE)
(74) Vertreter: Pott, Ulrich

(57) **Zusammenfassung**

Die Erfindung bezieht sich auf ein Transportfahrzeug 1, insbesondere ein Anhängerfahrzeug, mit einer über ein Fahrgestell 2 auf dem Erdboden abstützbaren Ladefläche, die einen Grundrahmen 5 aufweist, der kippbar oder nicht kippbar mit dem Fahrgestell 2 verbunden ist. Um ein derartiges Transportfahrzeug 1 zu verbessern ist vorgesehen, dass die Ladefläche ein relativ zu dem Grundrahmen 5 über einen motorischen Antrieb bewegbares Förderband 8 aufweist, das endlos ausgebildet und über eine Antriebsrolle 6 und eine Umlenkrolle 7 geführt ist, wobei eine Spannvorrichtung 11 vorgesehen ist, über die die Umlenkrolle 7 oder die Antriebsrolle 6 aus einer Außerbetriebsstellung in eine lageversetzte Betriebsstellung und zurück überführbar ist, in der das Förderband 8 gespannt ist, wobei das Förderband 8 in der Außerbetriebsstellung an zumindest einer Längsseite des Grundrahmens 5 von der Antriebsrolle 6, der Umlenkrolle 7 und von dem Grundrahmen 5 abziehbar ist.

## Beschreibung

Die Erfindung bezieht sich auf ein Transportfahrzeug, insbesondere ein Anhängerfahrzeug, mit einer über ein Fahrgestell auf dem Erdboden abstützbaren Ladefläche, die einen Grundrahmen aufweist, der kippbar oder nicht kippbar mit dem Fahrgestell verbunden ist.

Transportfahrzeuge der vorgenannten Art sind allgemein bekannt und dienen beispielsweise dazu, an einen PKW oder an einen LKW angehängt zu werden und Transportgüter zu transportieren, oder auch, um als PKW-Transportfahrzeug ausgestattet zu sein mit einer Ladefläche, auf der ein Fahrzeug abzustellen ist. Um derartige PKWs z. B. auf ein derartiges Fahrzeug zu bringen, sind in aller Regel Rampen notwendig, über die ein PKW auf das Transportfahrzeug zu fahren ist. Dies ist mit nicht unerheblichen Risiken verbunden, da die Transportrampen zielgenau zu befahren sind und im Übrigen der PKW auf der Ladefläche noch weiterfahren muss, um in seine Endstellung zu gelangen. Eine Bedienungsperson muss sodann aus dem auf der Ladefläche abgestellten Fahrzeug aussteigen, wozu in aller Regel kaum Platz vorhanden ist.

Es ist Aufgabe der vorliegenden Erfindung, ein Transportfahrzeug zu schaffen, mit dem Gegenstände, insbesondere aber auch ein PKW, mit vermindertem Aufwand geladen werden kann. Zudem soll das Transportfahrzeug in der Lage sein, so ausgerüstet zu sein, dass es in bedienfreundlicher Weise zu warten ist.

Zur Lösung dieser Aufgabe zeichnet sich das Transportfahrzeug der eingangs genannten Art dadurch aus, dass die Ladefläche ein relativ zu dem Grundrahmen über einen motorischen Antrieb bewegbares Förderband aufweist, das endlos ausgebildet und über eine Antriebsrolle und eine Umlenkrolle geführt ist, wobei eine Spannvorrichtung vorgesehen ist, über die die Umlenkrolle oder die Antriebsrolle aus einer Außerbetriebsstellung in eine lageversetzte Betriebsstellung und zurück überführbar ist, in der das Förderband gespannt ist, wobei das Förderband in der Außerbetriebsstellung an zumindest einer Längsseite des Grundrahmens von der Antriebsrolle, der Umlenkrolle und von dem Grundrahmen abziehbar ist.

Damit ist ein Transportfahrzeug zur Verfügung gestellt, bei dem über das Förderband ein zu transportierendes Gut, insbesondere auch ein zu transportierendes Fahrzeug vom rückseitigen Ende des Transportfahrzeuges bis in seine Transportstellung transportiert und mithin gefördert werden kann. Bei gegensinnigem Antrieb des Förderbandes kann dieses auch dazu mithelfen, Transportgüter wieder zu entladen. Ist das Transportfahrzeug mit einem kippbaren Grundrahmen ausgestattet, kann z. B. ein zu transportierendes Fahrzeug auf das rückwändige Ende des Grundrahmens und damit auf das Förderband gebracht werden, so dass es dann von dem Förderband selbsttätig in seine Transportendstellung gebracht werden kann. Danach kann der Grundrahmen wieder in eine rückgekippte Transportstellung überführt werden.

Bevorzugterweise ist das Transportband mit Leisten ausgestattet, um einen Transportvorgang zu erleichtern. Dieses können z. B. metallische Leisten sein, die sich quer zur Förderrichtung des Förderbandes erstrecken. Auch ist es möglich, an dem Förderband eine Anhängervorrichtung zu installieren, z. B. an einer vorgenannten Leiste, um mit Hilfe des Förderbandes Transportgüter zu laden.

An dem Grundrahmen ist zudem eine Spannvorrichtung vorgesehen, die auf die Antriebsrolle und/oder die Umlenkrolle wirkt, so dass vor einem Transportvorgang das Förderband in die gespannte Betriebsstellung gebracht werden kann. Nach Beendigung eines Transportvorganges kann über die Spannvorrichtung das Förderband wieder in eine Außerbetriebsstellung gebracht werden, so dass das Förderband entspannt ist. Dies erfolgt dadurch, dass entweder die Umlenkrolle oder die Antriebsrolle oder sowohl die Umlenkrolle als auch die Antriebsrolle lageversetzt werden über die entsprechende Spannvorrichtung. In dieser Außerbetriebsstellung kann das Förderband sehr einfach zu einer Seite des Transportfahrzeuges abgezogen werden, um das Förderband beispielsweise gegen ein anderes Förderband auszutauschen.

Besonders bevorzugt ist, wenn das Transportfahrzeug eine Einfädelungsvorrichtung aufweist, die das Förderband seitlich begrenzt. Diese Einfädelungsvorrichtung können z. B. metallische Begrenzungsplatten sein, die an dem Grundrahmen lösbar befestigt sind, beispielsweise über Schrauben. Im entspannten Zustand kann das Förderband nach einem einfachen Lösen der Schrauben und Demontage der Begrenzungsplatten wiederum seitlich abgenommen werden. Ansonsten sorgen die Begrenzungsplatten dafür, dass das Förderband sicher auf der Antriebsrolle und der Umlenkrolle geführt ist und auch während eines Transportvorganges dort sicher verbleibt.

Hinsichtlich weiterer wesentlicher Ausgestaltungen der Erfindung wird auf weitere Unteransprüche, die nachfolgende Beschreibung und die Zeichnungen verwiesen. In den Zeichnungen zeigen:
- Fig. 1: In einer perspektivischen Ansicht ein erstes Ausführungsbeispiel des Transportfahrzeuges nach der Erfindung;
- Fig. 2: eine weitere perspektivische Darstellung eines weiteren Ausführungsbeispiels nach der Erfindung;
- Fig. 3: ein weiteres Ausführungsbeispiel des Transportfahrzeuges nach der Erfindung in einer perspektivischen Darstellung;
- Fig. 4: ein weiteres Ausführungsbeispiel des Transportfahrzeuges nach der Erfindung in einer perspektivischen Darstellung;
- Fig. 5: in einer Seitendarstellung ausschnittsweise ein Detail hinsichtlich einer Einfädelungsvorrichtung;
- Fig. 6: in einer ausschnittsweise dargestellten perspektivischen Darstellung ein Detail des Förderbandes mit einer Leiste mit Aufnahmen als Anhängevorrichtung, und
- Fig. 7: in einer Draufsicht den Grundrahmen eines Ausführungsbeispiels des Transportfahrzeuges nach der Erfindung mit einer Spannvorrichtung.

In den Zeichnungen sind grundsätzliche übereinstimmende Teile mit übereinstimmenden Bezugsziffern versehen.

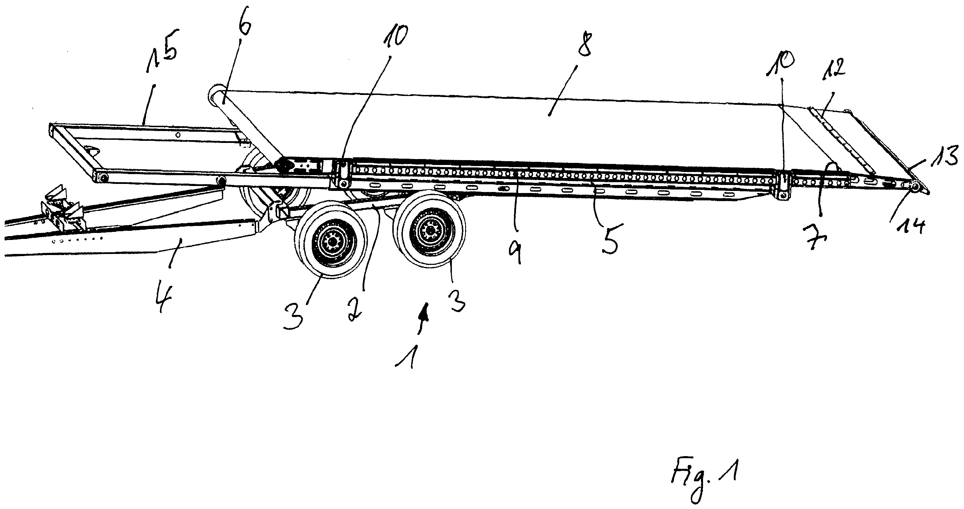

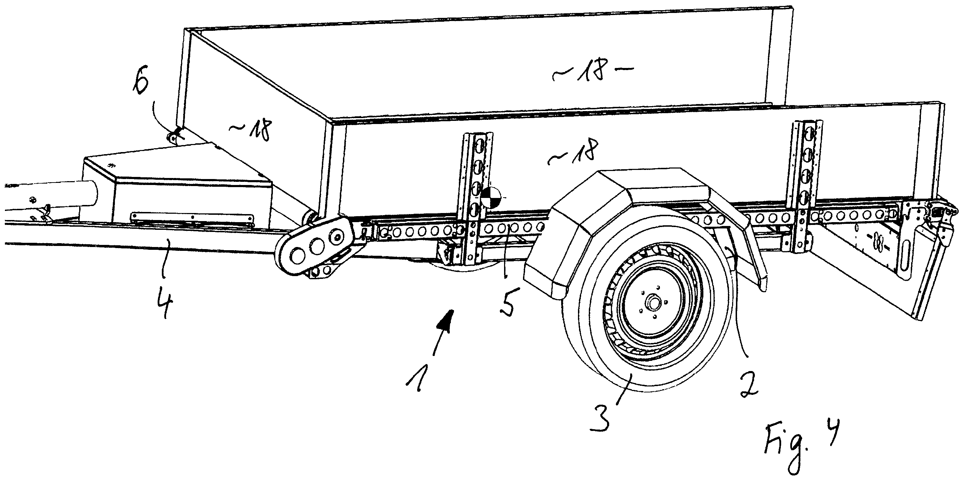

Allgemein mit 1 ist ein Transportfahrzeug beziffert, das in dem Ausführungsbeispielen nach den Figuren 1 bis 3 als PKW-Transportfahrzeug ausgebildet ist und in der Ausgestaltung nach dem Ausführungsbeispiel nach Fig. 4 als ein mit Ladebordwänden versehenes Transportfahrzeug gestaltet ist.

Das Transportfahrzeug 1 hat ein Fahrgestell 2 mit Rädern 3 und einer Zugdeichsel 4. Auf dem Fahrgestell 2 ist ein Grundrahmen 5 abgestützt, der eine Antriebsrolle 6 aufweist und eine Umlenkrolle 7 sowie ein um die Umlenkrolle 7 sowie die Antriebsrolle 6 geführtes Förderband 8, das als Endlosförderband ausgebildet ist.

Im Einzelnen nicht näher dargestellt sind die Antriebsrolle 6 und die Umlenkrolle 7 mehrfach geteilt und über innenseitige Lager gelagert. An der Außenseite des Grundrahmens 5 ist eine Multifunktionsleiste 9 angebracht, die entsprechende Lochausnehmungen hat, um flexibel Ausrüstungsgegenstände befestigen zu können wie beispielsweise Einfädelvorrichtungen 10 in Gestalt von Metallplatten, die das Förderband 8 seitlich begrenzen.

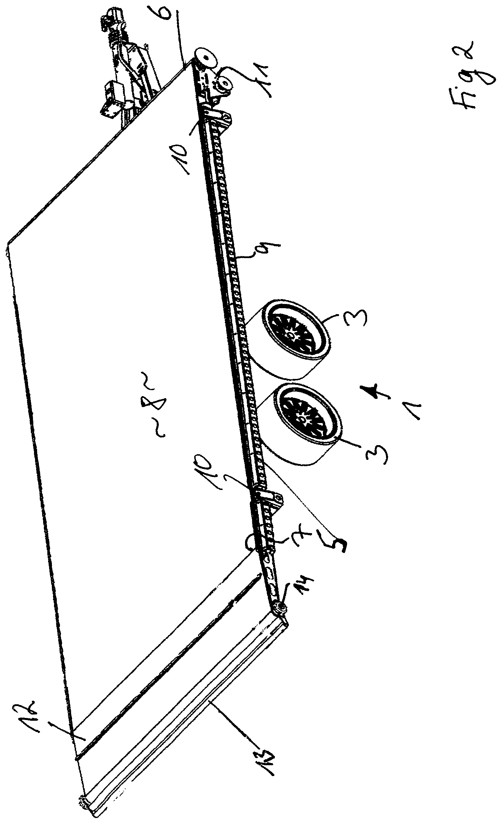

Wie aus dem Ausführungsbeispiel nach Fig. 2 hervorgeht, ist eine Spannvorrichtung 11 vorgesehen, über die die Antriebsrolle 6 hinsichtlich ihrer Lage am Grundrahmen 5 lagezuversetzen ist, indem die Antriebsrolle 6 verstellt wird, um den Lageabstand zwischen der Antriebsrolle 6 und der Umlenkrolle 7 zu verkleinern oder zu vergrößern im Falle der Spannung des Förderbandes 8. Der hydraulische Antrieb zum Antrieb des Förderbandes 8 ist bei dem Ausführungsbeispiel nach Fig. 2 in die Spannvorrichtung 11 integriert.

Auf dem Förderband 8 ist eine metallische Querleiste 12 aufgebracht. Des Weiteren sind eine Auffahrhilfe 13 vorgesehen sowie Stützrollen 14. Die Auffahrhilfe 13 kann auch dergestalt vorgesehen sein, dass sie in den Grundrahmen 5 teleskopierbar ist. Die Ladefläche kann darüber hinaus noch mit einem ein- und ausschiebbaren Laderahmen 15 ausgerüstet sein.

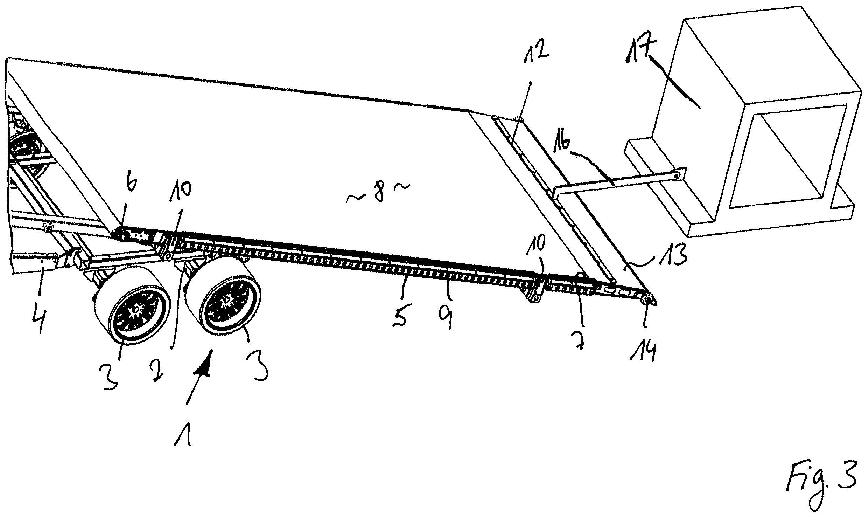

In dem Ausführungsbeispiel nach Fig. 3 ist angedeutet, dass an der Querleiste 12 über eine Stange 16 eine zu befördernde Last 17 angehängt werden kann. Wird das Transportband 8 in Bewegung gesetzt, wird die Transportleiste 12 zusammen mit dem Förderband 8 bewegt und zieht somit das Transportgut 17 auf die Ladefläche und realisiert damit eine Aufzugvorrichtung.

Bei ansonsten identischem Aufbau und bei ansonsten ähnlichem Aufbau zeigt das Ausführungsbeispiel nach Fig. 4 ein Transportfahrzeug, das z. B. zum Transport von Baumaterialien genutzt werden kann mit entsprechenden Ladebordwänden 18, wobei z. B. auch Schüttgüter befördert werden können, die durch eine Bewegung des Förderbandes 8 gegen die Beladungsförderrichtung auch wiederrum entladen werden können.

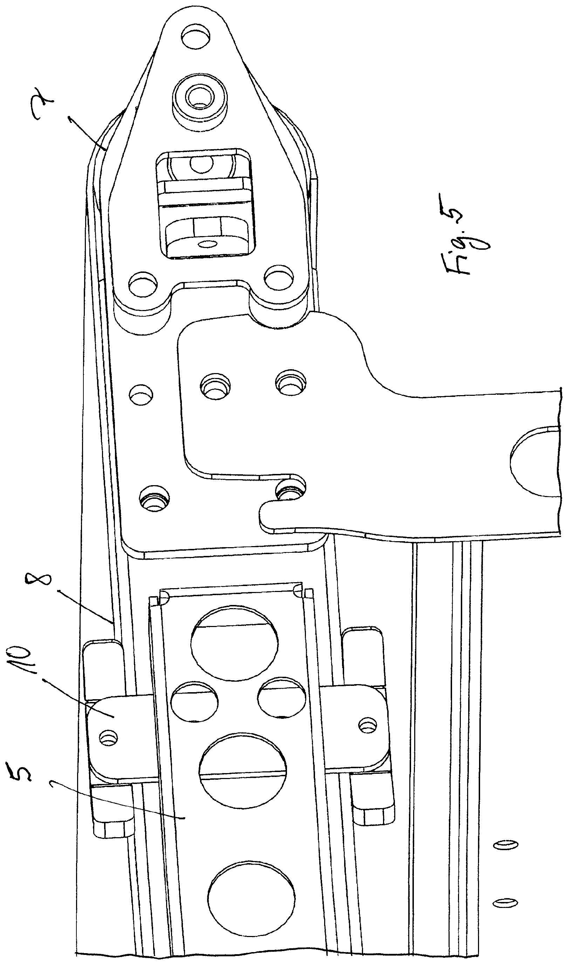

Fig. 5 zeigt in einer teilweisen Seitendarstellung die Einfädelvorrichtung 10, die das Förderband 8 seitlich begrenzt.

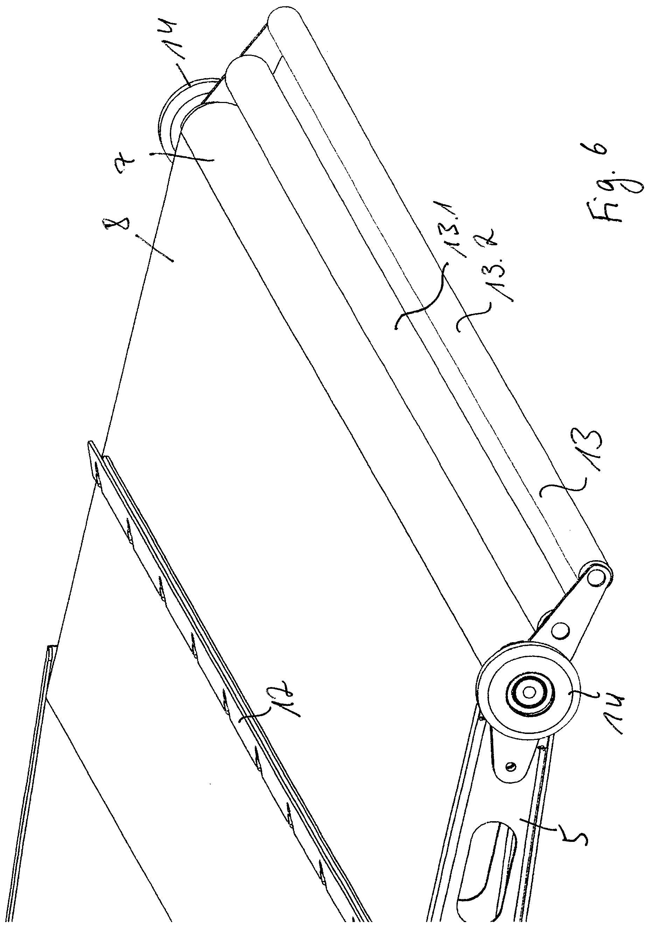

Fig. 6 verdeutlicht die Umlenkrolle 7 mit dem Förderband 8, die mit Aufnahmen versehenden Querleiste 12 sowie die Stützrollen 14 im Bereich der Umlenkrolle 7 mit der entsprechenden Aufzugsvorrichtung 13 bzw. Auffahrhilfe, die auch Rollen 13.1 und 13.2 aufweisen kann.

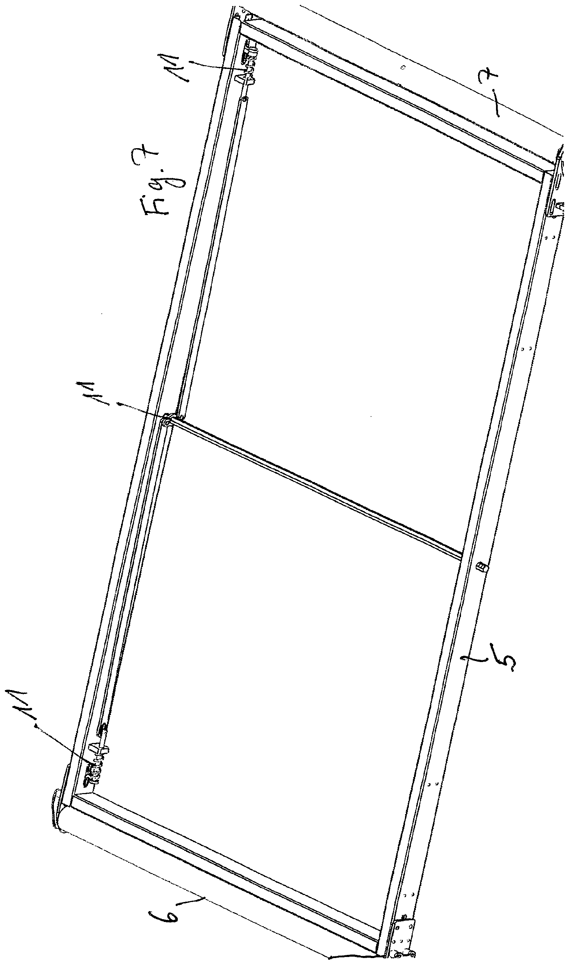

In Fig. 7 ist ein Ausführungsbeispiel einer Spannvorrichtung 11 näher veranschaulicht.

## Patentansprüche

1. Transportfahrzeug (1), insbesondere ein Anhängerfahrzeug, mit einer über ein Fahrgestell (2) auf dem Erdboden abstützbaren Ladefläche, die einen Grundrahmen (5) aufweist, der kippbar oder nicht kippbar mit dem Fahrgestell (2) verbunden ist, **dadurch gekennzeichnet, dass** die Ladefläche ein relativ zu dem Grundrahmen (5) über einen motorischen Antrieb bewegbares Förderband (8) aufweist, das endlos ausgebildet und über eine Antriebsrolle (6) und eine Umlenkrolle (7) geführt ist, wobei eine Spannvorrichtung (11) vorgesehen ist, über die die Umlenkrolle (7) oder die Antriebsrolle (6) aus einer Außerbetriebsstellung in eine lageversetzte Betriebsstellung und zurück überführbar ist, in der das Förderband (8) gespannt ist, wobei das Förderband (8) in der Außerbetriebsstellung an zumindest einer Längsseite des Grundrahmens (5) von der Antriebsrolle (6), der Umlenkrolle (7) und von dem Grundrahmen (5) abziehbar ist.

2. Transportfahrzeug (1) nach Anspruch 1, **dadurch gekennzeichnet, dass** die Umlenkrolle (7) oder die Antriebsrolle (6) aus der Außerbetriebsstellung translatorisch in die lageversetzte Betriebsstellung und zurück überführbar ist.

3. Transportfahrzeug (1) nach Anspruch 1 oder 2, **dadurch gekennzeichnet, dass** das Förderband (8) von dem motorischen Antrieb in zwei Richtungen beweglich antreibbar ist.

4. Transportfahrzeug (1) nach einem der Ansprüche 1 bis 3, **dadurch gekennzeichnet, dass** auf dem Förderband (8) quer zu seiner Bewegungsrichtung Leisten (12) aufgebracht sind.

5. Transportfahrzeug (1) nach Anspruch 4, **dadurch gekennzeichnet, dass** die Leisten (12) zumindest jeweils eine Anhängevorrichtung zur Anbindung eines Transportgutes (17) aufweisen.

6. Transportfahrzeug (1) nach einem der Ansprüche 1 bis 5, **dadurch gekennzeichnet, dass** die Umlenkrolle (7) geteilt ausgebildet ist.

7. Transportfahrzeug (1) nach einem der Ansprüche 1 bis 6, **dadurch gekennzeichnet, dass** die Umlenkrolle (7) mehrfach gelagert ist.

8. Transportfahrzeug (1) nach einem der Ansprüche 1 bis 7, **dadurch gekennzeichnet, dass** die Umlenkrolle (7) außen und/oder mittig gelagert ist.

9. Transportfahrzeug (1) nach einem der Ansprüche 1 bis 8, **dadurch gekennzeichnet, dass** die Umlenkrolle (7) im Durchmesser kleiner ausgebildet ist als die Antriebsrolle (6).

10. Transportfahrzeug (1) nach einem der Ansprüche 1 bis 9, **dadurch gekennzeichnet, dass** die Antriebsrolle (6) geteilt ausgebildet und/oder mehrfach außen und/oder mittig gelagert ist.

11. Transportfahrzeug (1) nach einem der Ansprüche 1 bis 10, **dadurch gekennzeichnet, dass** an der Ladefläche Stützrollen (14) vorgesehen sind.

12. Transportfahrzeug (1) nach einem der Ansprüche 1 bis 11, **dadurch gekennzeichnet, dass** ein elektrisch oder hydraulisch einziehbarer Unterfahrschutz vorgesehen ist.

13. Transportfahrzeug (1) nach einem der vorangehenden Ansprüche, **dadurch gekennzeichnet, dass** am Heck des Transportfahrzeuges (1) eine Aufzugvorrichtung vorgesehen ist.

14. Transportfahrzeug (1) nach einem der Ansprüche 1 bis 13, **dadurch gekennzeichnet, dass** die Ladefläche mit einem aus- und einschiebbaren Ladeflächerahmen (15) versehen ist.

15. Transportfahrzeug (1) nach einem der Ansprüche 1 bis 14, **dadurch gekennzeichnet, dass** die Antriebsrolle (6) gummiert ausgebildet ist.

16. Transportfahrzeug (1) nach einem der Ansprüche 1 bis 15, **dadurch gekennzeichnet, dass** die Ladefläche mit einem Ausschubschlitten versehen ist.

17. Transportfahrzeug (1) nach einem der vorangehenden Ansprüche, **dadurch gekennzeichnet, dass** das Förderband (8) seitlich von zumindest einer an dem Grundrahmen (5) lösbar befestigten Einfädelvorrichtung (10) begrenzt ist.

18. Transportfahrzeug (1) nach Anspruch 17, **dadurch gekennzeichnet, dass** die Einfädelvorrichtung (10) als Begrenzungsplatte für das Förderband (8) ausgebildet ist.

19. Transportfahrzeug (1) nach einem der vorangehenden Ansprüche, **dadurch gekennzeichnet, dass** an dem Grundrahmen (5) jeweils an seinen Längsseitenaußenkanten eine mit Ausnehmungen versehende Multifunktionsleiste (9) angebracht ist.

20. Transportfahrzeug (1) nach einem der vorangehenden Ansprüche, **dadurch gekennzeichnet, dass** der Grundrahmen (5) mit über die Ladefläche emporstehenden Bordwänden (18) versehen ist.
